# EUROPÄISCHE PATENTSCHRIFT

(11) **EP 0 453 881 B1**
(45) Veröffentlichungstag und Bekanntmachung des Hinweises auf die Patenterteilung: **04.08.1993**
(21) Anmeldenummer: 91105738.8
(22) Anmeldetag: 11.04.1991
(51) Int. Cl.: C02F 3/22

(54) **Verfahren zum biologischen Reinigen von Abwasser und Anlage zur Durchführung des Verfahrens**
Process and apparatus for biological purification of waste water
Procédé et installation pour la purification biologique d'eau usée

(30) Priorität: 18.04.1990 DE 4012300
(43) Veröffentlichungstag der Anmeldung: 30.10.1991
(73) Patentinhaber: PALO UMWELTTECHNOLOGIEN GmbH & Co. KG, D-47051 Duisburg (DE)
(72) Erfinder: Paterok, Norbert, Dipl.-Ing., W-4150 Krefeld (DE); Loosen, Heinz, W-4018 Langenfeld (DE)
(74) Vertreter: Finkener und Ernesti Patentanwälte

(56) Entgegenhaltungen:
- EP-A- 0 130 499
- EP-A- 0 255 642
- DD-A- 274 143
- FR-A- 2 440 224
- US-A- 3 152 982

## Beschreibung

Die Erfindung betrifft ein Verfahren zum biologischen Reinigen von Abwasser in einem geschlossenen Reaktor mittels Schlaufenbetrieb, bei dem das Abwasser zusammen mit einem Sauerstoff enthaltenden Gas, vorzugsweise Luft, über eine Zweistoffdüse einem inneren Strömungsleitrohr zugeführt wird, das es an seinem unteren Ende verläßt und über einen das Leitrohr umgebenden Ringraum nach oben strömt, worauf eine nicht über einen Überlauf ablaufende Menge des Abwassers wieder in das obere Ende des Leitrohres eintritt.

Bei diesem aus dem europäischen Patent 0 130 499 bekannten Verfahren wird dem geschlossenen Reaktorgefäß an seinem unteren Ende Bakterienmasse enthaltendes Abwasser mittels einer Pumpe entnommen und erneut der im oberen Bereich des Strömungsleitrohres angeordneten Treibstrahldüse zugeführt. Dies ist auch bei dem aus der DE-OS 37 38 295 bekannten Verfahren der Fall, bei dem das Abwasser in einem zweiten äußeren, mit Einbauten versehenen Ringraum einer Nachreaktion unterworfen wird.

Aus der DD-PS 27 41 43 ist eine Vorrichtung zur mehrfachen Umwälzung von Wasser-Luft-Gemischen in Tiefschachtkläranlagen mit einer oberen Schachterweiterung bekannt, bei der ein Abströmrohr, das an seinem oberen Ende eine Düse mit einem Diffusor enthält, von dem Strömungsleitrohr umgeben ist. Dabei ist das Ende des Abströmrohres mit mehreren gekrümmten Abgängen versehen, die die Wandung des Strömungsleitrohres in dessen unterem Bereich durchdringen, so daß das zu behandelnde Abwasser nicht dem Strömungsleitrohr, sondern dem Abwasser zugeführt wird, das in dem das Strömungsleitrohr umgebenden Ringraum aufwärts strömt. Die bekannte Vorrichtung benötigt zur Aufrechterhaltung des Schlaufenbetriebes einen erheblichen Energieaufwand, so daß infolge der am Düsenaustritt auftretenden Scherkräfte ein Teil der Bakterien zerstört und damit der Wirkungsgrad der Behandlung verringert wird.

Die Aufgabe, die der Erfindung zugrunde liegt, besteht darin, den Wirkungsgrad der bekannten mit Schlaufenbetrieb arbeitenden Verfahren zur biologischen Abwasserreinigung zu verbessern.

Die Erfindung geht von der Erkenntnis aus, daß wegen des hohen Leistungseintrages, der bei den bekannten Verfahren beim Einleiten des Abwasser/Luftgemisches durch die Treibstoffdüse erforderlich ist, um den Schlaufenbetrieb aufrechtzuerhalten, infolge der am Austritt der Düse auftretenden Scherkräfte große Mengen der in dem Abwasser enthaltenen Bakterien zerplatzen und dabei ihre Wirksamkeit verlieren.

Es hat sich überraschenderweise herausgestellt, daß sich der Wirkungsgrad der bekannten Anlagen dadurch ganz erheblich verbessern läßt, daß, ausgehend von dem eingangs beschriebenen Verfahren, ein Gemisch aus Abwasser, Biomasse und gegebenenfalls Rücklaufschlamm wenigstens einem Strömungsleitrohr nach vorheriger Entgasung zusammen mit dem sauerstoffhaltigen Gas in dessen unterem Bereich zugeführt, daß ein Teilstrom des zu behandelnden Abwassers dem in dem Ringraum aufsteigenden Abwasserstrom zugeleitet wird und daß ständig ein Teil des behandelten Gemisches ausschließlich über einen Überlauf in ein Misch- und Entgasungsgefäß übertritt, in das auch das zu behandelnde schadstoffhaltige Wasser eingeleitet wird und dem das Gemisch entnommen wird, wobei sowohl das bei dem Prozeß entstehende Abgas als auch das zu behandelnde Gemisch (Ablauf) aus dem Misch- und Entgasungsgefäß abgezogen werden.

Erfindungsgemäß kann das Gemisch in mehrere parallel geschaltete Strömungsleitrohre eingeleitet werden, die symmetrisch in dem Mantelraum des Reaktors angeordnet sind.

Die Erfindung sieht ferner vor, daß der Teilstrom des zu behandelnden Gemisches aufgeteilt und in unterschiedlichen Höhenstufen in den Ringraum eingedüst wird, um eine sekundäre Dispergierung zu erhalten und die Biomasse zusätzlichen Scherkräften zu unterwerfen. Dabei besteht die Möglichkeit, dem in dem Ringraum aufwärts strömendem Gemisch durch entsprechende Anordnung der Düsen eine schräg nach oben gerichtete Strömung aufzuzwingen. Vorzugsweise wird ein Teilstrom des zu behandelnden Gemisches von etwa 10 bis 20 % in den Ringraum eingeleitet.

Eine bevorzugte Ausführungsform sieht vor, der Zuführungsleitung für das zu behandelnde Gemisch einen weiteren Teilstrom, der etwa 5 % der Gesamtmenge betragen kann, zu entnehmen und in dem gflüssigkeitsfreien Raum des Misch- und Entgasungsgefäßes zu versprühen. Die der Zweistoff-Treibstrahldüse zugeführte Luftmenge kann erfindungsgemäß dem nicht mit Flüssigkeit gefüllten Raum des Misch- und Entgasungsgefäßes entnommen werden. Die Erfindung sieht ferner vor, daß an ein oder mehrere Misch- und Entgasungsgefäße ein oder mehrere zusätzliche Schlaufenreaktoren angeschlossen werden, die parallel und/oder in Reihe betrieben werden.

Gegenstand der Erfindung ist ferner eine Anlage zur Durchführung des Verfahrens, die aus einem senkrecht stehenden Schlaufenreaktor mit einem Strömungsleitrohr und einem dieses unter Bildung eines Ringraumes umgebenden äußeren Mantel besteht und eine in dem Strömungsleitrohr angeordnete Zweistoffdüse mit einem nach unten gerichteten Austritt zur Zufuhr des zu behandelnden Abwassers und eines sauerstoffhaltigen Gases sowie einen Überlauf zum Abzug des zu behandelnden Abwassers enthält, der oberhalb des oberen Endes des oben und unten offenen Strömungsleitrohres in dem Mantel angeordnet ist.

Ausgehend von einer derartigen zum Stande der Technik gehörenden Anlage besteht die Erfindung darin, daß die Zweistoffdüse jeweils im unteren Abschnitt, vorzugsweise kurz vor dem unteren Ende des Strömungsleitrohres bzw. der Strömungsleitrohre angeordnet, daß von der Leitung, über die das Abwasser der Zweistoffdüse zugeführt wird, eine Zweigleitung abgeht, über die ein Teilstrom des Abwassers einer oder mehreren Düsen zugeführt wird, die in dem Ringraum angeordnet sind, und daß der Überlauf in ein Misch- und Entgasungsgefäß mündet, in dessen unteren Abschnitt das zu behandelnde Abwasser über eine Einlaufleitung eingeleitet wird und aus dessen vorzugsweise konisch zulaufendem Boden das zu behandelnde Abwasser zusammen mit entgaster Biomasse über eine Pumpe und die Leitung den Düsen zugeführt wird. Erfindungsgemäß können in dem Mantelraum des Raktors mehrere parallel geschaltete, mit Zweistoffdüsen ausgestattete Strömungsleitrohre angeordnet sein, insbesondere in der Weise, daß um ein mittig angeordnetes Strömungsleitrohr mehrere, vorzugsweise drei bis fünf weitere Strömungsleitrohre symmetrisch angebracht sind.

Eine bevorzugte Ausführungsform der Erfindung sieht vor, daß die Düsen, über die der Teilstrom in den Ringraum eingeleitet wird in unterschiedlichen Höhenstufen angeordnet sind, wobei die Leitungen, über die das zu behandelnde Abwasser in den Ringraum eingeleitet wird, schräg nach oben und tangential zu dem Strömungsleitrohr gerichtet sind.

Die Erfindung sieht ferner vor, daß von der Zuführungsleitung für das Abwasser hinter der Pumpe eine weitere Teilstromleitung abgezweigt ist, die oberhalb des Flüssigkeitsspiegels in dem Misch- und Entgasungsgefäß endet und mit einem Düsensystem zum Versprühen eines Abwasserteilstroms auf die Flüssigkeitsoberfläche versehen ist. Gemäß einem weiteren Merkmal der Erfindung erfolgt die Einleitung des sauerstoffhaltigen Gases über die Zweistoffdüse durch mehrere mittig im Düsenquerschnitt angeordnete Rohre oder Austrittsöffnungen, deren Durchmesser nicht größer als 50 mm ist.

Es hat sich herausgestellt, daß sich mit dem erfindungsgemäßen Verfahren und einer zu dessen Durchführung geeigneten Anlage der Wirkungsgrad der Reinigung ganz erheblich verbessern läßt. Die Anmelderin führt dies darauf zurück, daß infolge der Anordnung der Zweistoffdüse im unteren Bereich des Strömungsleitrohres der Energiebedarf zur Aufrechterhaltung des Schlaufenbetriebes wesentlich verringert wird, so daß durch die gleichzeitige Verringerung der am Düsenaustritt auftretenden Scherkräfte die im Abwasser enthaltenen Bakterien geteilt und nicht in dem Umfange durch Zerplatzen zerstört werden, wie es bei den bekannten Anlagen der Fall ist. Es stehen somit erheblich mehr Bakterien zur Verfügung, die die angedaute Nahrung der in geringem Maß zerplatzten Bakterien begierig aufnehmen, so daß sich die vorhandenen Bakterien in sehr viel größerem Umfange vermehren und zur Reinigung des Abwassers zur Verfügung stehen.

Die Erfindung wird anhand der Zeichnung, auf der ein Ausführungsbeispiel dargestellt ist, erläutert. Es zeigen:
- Fig. 1: eine Anlage zur biologischen Abwasserreinigung nach dem erfindungsgemäßen Verfahren,
- Fig. 2: eine Draufsicht auf die in Fig. 1 dargestellte Anlage,
- Fig. 3: eine Ausführungsform der Erfindung mit zwei Schlaufenreaktoren und
- Fig. 4: eine Draufsicht auf die in Fig. 3 dargestellte Anlage.

Die erfindungsgemäße Anlage enthält einen in besonderer Weise betriebenen Schlaufenreaktor (1) und ein Misch- und Entgasungsgefäß (2). Der Schlaufenreaktor besteht wie üblich aus einem zylindrischen Mantel (3) und einem konzentrisch darin angeordneten Strömungsleitrohr (4), das oben und unten offen ist und dessen oberes Ende unterhalb des mit (5) bezeichneten Flüssigkeitsspiegels liegt. Der zylindrische Mantel (3) und das Gefäß (2) sind mit Deckeln verschlossen; es handelt sich somit um einen geschlossenen Schlaufenreaktor. Mit (6) ist eine Zweistoffdüse bezeichnet, die üblicherweise aus einem mittleren Rohr zur Zufuhr eines Gases, im vorliegenden Fall zur Zufuhr von Sauerstoff bzw. eines sauerstoffhaltigen Gases über die Leitung (7) dient, während über den das Rohr (7) umgebenden Ringraum das der Düse (6) über die Leitung (8) zugeführte zu behandelnde Abwasser, bei dem es sich um ein Gemisch aus Abwasser, Biomasse und gegebenenfalls Rücklaufschlamm handelt, aus der Düse austritt. Die Erfindung sieht vor, daß die Düse im unteren Bereich des Strömungsleitrohres, vorzugsweise kurz vor dessen Ende angeordnet ist. bei einer bevorzugten Ausführungsform werden zur Zufuhr des sauerstoffhaltigen Gases mehrere dicht beieinander angeordnete Rohre benutzt, deren Durchmesser nicht größer als 50 mm ist und nicht, wie üblich, ein einzelnes Rohr mit entsprechend größerem Durchmesser.

Von der Zuführungsleitung (8) wird ein Teilstrom über eine Leitung (9) abgezweigt und mittels einer Einstoffdüse (10) in den Ringraum (11) eingeleitet. Die Einleitung erfolgt schräg nach oben und in einer tangentialen Richtung zum Strömungsleitrohr (4), so daß dem Abwasser in dem Ringraum eine schräg nach oben gerichtete Bewegung aufgezwungen wird. Eine bevorzugte Ausführungsform der Erfindung sieht vor, einen weiteren Teilstrom in einer anderen Höhenstufe über eine Leitung (9a) und eine Düse (10a) in den Ringraum einzuleiten. Mit (12) sind Leitbleche bezeichnet, die am äußeren Umfang des Strömungsleitrohres im Bereich des oberen Endabschnittes angebracht sein können, um die Trennung von Gas und Flüssigkeit zu verbessern.

Das in dem Reaktor behandelte Abwasser tritt zusammen mit dem sich oberhalb des Flüssigkeitsspiegels, (5) ansammelnden Gas über einen Überlauf (13) in das Misch- und Entgasungsgefäß (2) über, dem die behandelte Flüssigkeit über den Ablauf (14) entnommen wird. Dem Gefäß (2) wird das zu behandelnde Abwasser über einen im unteren Bereich mündenden Einlauf (15) zugeführt, am unteren Ende des konischen Bodens das zu behandelnde Gemisch über die Leitung (8) entnommen und mittels einer Pumpe (16) in die Treibstrahldüse (6) und die Düsen (10 und 10a) eingeleitet. Mit (17) ist eine von der Leitung (8) hinter der Pumpe (16) abgezweigte Leitung bezeichnet, über die ein Teilstrom des Abwassers vorzugsweise tangential in den Gasraum des Gefäßes (2) eingeleitet und in diesem über ein Düsensystem (17a) versprüht wird, um den aufschwimmenden Schaum zu zerschlagen und mit der entgasten Biomasse, dem Rücklaufschlamm und dem eingeleiteten Abwasser zu vermischen. Die Abluft wird über die Leitung (18) abgezogen; sie kann gegebenenfalls teilweise der Leitung (7) zugeführt und als sauerstoffhaltiges Gas wieder in den Prozeß eingeführt werden oder zwecks Befreiung von Aerosolen und belästigenden Geruchstoffen in getrennten Einheiten behandelt werden.

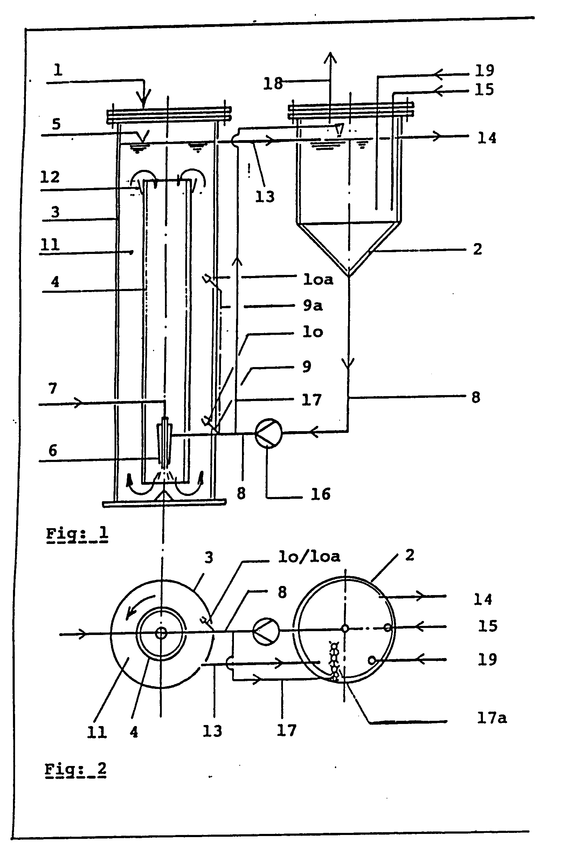

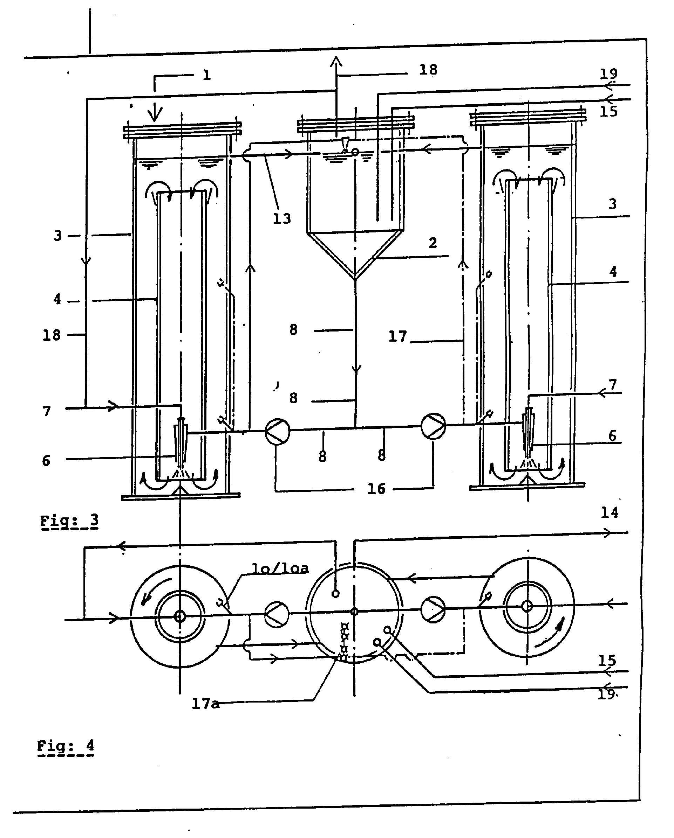

Bei der auf den Fig. 3 und 4 dargestellten Anlage handelt es sich um eine bevorzugte Ausführungsform der Erfindung, bei der zwei Schlaufenreaktoren an ein gemeinsames Misch- und Entgasungsgefäß (2) angeschlossen sind. Die Schlaufenreaktoren werden, wie sich ohne weiteres aus der zeichnerischen Darstellung ergibt, parallel betrieben. Der Aufbau der Schlaufenraktoren entspricht dem der Fig. 1; für die wesentlichen sich entsprechenden Teile wurden daher die gleichen Bezugszeichen gewählt. Es ist ohne weiteres möglich, das Misch- und Entgasungsgefäß so zu dimensionieren, daß auch weitere, z.B. drei oder fünf Schlaufenreaktoren an ein zentral angeordnetes Misch- und Entgasungsgefäß (2) angeschlossen werden können, die dann ebenfalls parallel betrieben werden. Es können auch mehrere Reaktoren (1) in Reihe geschaltet und an ein oder mehrere Misch- und Entgasungsgefäße (2) angeschlossen werden.

Bei beiden Ausführungsformen wird das über den Ablauf (14) abgezogene Gemisch einem nicht dargestellten Absetzbecken zugeführt. Der darin abgeschiedene Schlamm wird als Rücklauf über die Leitung (19) in das Misch- und Entgasungsgefäß zurückgeleitet.

Es besteht selbstverständlich auch die Möglichkeit die Anlage ohne Zufuhr von Sauerstoff zu betreiben, wenn Mikroorganismen behandelt werden, deren Abbau nur in Abwesenheit von Sauerstoff abläuft (Denitrifikation).

## Patentansprüche

1. Verfahren zum biologischen Reinigen von Abwasser in einem geschlossenen Reaktor mittels Schlaufenbetrieb, bei dem das Abwasser zusammen mit einem Sauerstoff enthaltenden Gas, vorzugsweise Luft, über eine Zweistoffdüse einem inneren Strömungsleitrohr zugeführt wird, das es an seinem unteren Ende verläßt und über einen das Leitrohr umgebenden Ringraum nach oben strömt, worauf eine nicht über einen Überlauf ablaufende Menge des Abwassers wieder in das obere Ende des Leitrohres eintritt, dadurch gekennzeichnet, daß ein Gemisch aus Abwasser, Biomasse und gegebenenfalls Rücklaufschlamm wenigstens einem Strömungsleitrohr nach vorheriger Entgasung zusammen mit dem sauerstoffhaltigen Gas in dessen unterem Bereich zugeführt, daß ein Teilstrom des zu behandelnden Abwassers dem in dem Ringraum aufsteigenden Abwasserstrom zugeleitet wird und daß ständig ein Teil des behandelten Gemisches ausschließlich über einen Überlauf in ein Misch- und Entgasungsgefäß übertritt, in das auch das zu behandelnde schadstoffhaltige Wasser eingeleitet wird und dem das Gemisch entnommen wird, wobei sowohl das bei dem Prozeß entstehende Abgas als auch das zu behandelnde Gemisch (Ablauf) aus dem Misch- und Entgasungsgefäß abgezogen werden.

2. Verfahren nach Anspruch 1, dadurch gekennzeichnet, daß das Gemisch in mehrere parallel geschaltete Strömungsleitrohre eingeleitet wird, die symmetrisch in dem Mantelraum des Reaktors angeordnet sind.

3. Verfahren nach Anspruch 1 und 2, dadurch gekennzeichnet, daß der Teilstrom des zu behandelnden Gemisches in den Ringraum eingedüst wird.

4. Verfahren nach den Ansprüchen 1 bis 3, dadurch gekennzeichnet, daß der Teilstrom aufgeteilt und in unterschiedlichen Höhenstufen in den Ringraum eingedüst wird.

5. Verfahren nach einem der vorhergehenden Ansprüche, dadurch gekennzeichnet, daß der Teilstrom so in den Ringraum eingeführt wird, daß dem Gemisch eine schräg nach oben gerichtete Strömung aufgezwungen wird.

6. Verfahren nach einem der Ansprüche 1 bis 5, dadurch gekennzeichnet, daß etwa 10 - 20 % des zu behandelnden Gemisches als Teilstrom in den Ringraum eingeleitet werden.

7. Verfahren nach einem der Ansprüche 1 bis 6, dadurch gekennzeichnet, daß der Zuführungsleitung für das zu behandelnde Gemisch ein weiterer Teilstrom, vorzugsweise etwa 5 % entnommen und in dem flüssigkeitsfreien Raum des Misch- und Entgasungsgefäßes versprüht wird.

8. Verfahren nach einem der Ansprüche 1 bis 7, dadurch gekennzeichnet, daß die der Zweistoffdüse zugeführte Luftmenge dem nicht mit Flüssigkeit gefüllten Raum des Misch- und Entgasungsgefäßes entnommen wird.

9. Verfahren nach einem der Ansprüche 1 bis 8, dadurch gekennzeichnet, daß an ein oder mehrere Misch- und Entgasungsgefäße ein oder mehrere zusätzliche Schlaufenreaktoren angeschlossen werden, die parallel und/oder in Reihe betrieben werden.

10. Anlage zur Durchführung des Verfahrens nach den Ansprüchen 1 bis 9, die aus einem senkrecht stehenden Schlaufenreaktor mit einem Strömungsleitrohr und einem dieses unter Bildung eines Ringraumes umgebenden äußeren Mantel besteht und eine in dem Strömungsleitrohr angeordnete Zweistoffdüse mit einem nach unten gerichteten Austritt zur Zufuhr des zu behandelnden Abwassers und eines sauerstoffhaltigen Gases sowie einen Überlauf zum Abzug des behandelten Abwassers enthält, der oberhalb des oberen Endes des oben und unten offenen Strömungsleitrohres in dem Mantel angeordnet ist, dadurch gekennzeichnet, daß die Zweistoffdüse (6) jeweils im unteren Abschnitt, vorzugsweise kurz vor dem unteren Ende des Strömungsleitrohres (4) bzw. der Strömungsleitrohre angeordnet ist, daß von der Leitung (8), über die das Abwasser der Zweistoffdüse zugeführt wird, eine Zweigleitung (9) abgeht, über die ein Teilstrom des Abwassers einer oder mehrerer Einstoffdüsen (10, 10a) zugeführt wird, die in dem Ringraum (11) angeordnet sind, und daß der Überlauf (13) in ein Misch- und Entgasungsgefäß (2) mündet, in dessen unteren Abschnitt das zu behandelnde Abwasser über eine Einlaufleitung (15) eingeleitet wird und aus dessen vorzugsweise konisch zulaufendem Boden das zu behandelnde Abwasser zusammen mit entgaster Biomasse über eine Pumpe (16) und die Leitung (8) den Düsen (6, 10, 10a) zugeführt wird.

11. Anlage nach Anspruch 10, dadurch gekennzeichnet, daß in dem Mantelraum des Reaktors mehrere parallel geschaltete mit Zweistoffdüsen ausgestattete Strömungsleitrohre angeordnet sind.

12. Anlage nach Anspruch 11, dadurch gekennzeichnet, daß um ein mittig angeordnetes Strömungsleitrohr mehrere, vorzugsweise drei bis fünf weitere Strömungsleitrohre symmetrisch angeordnet sind.

13. Anlage nach den Ansprüchen 10 bis 12, dadurch gekennzeichnet, daß die Düsen (10, 10a), über die der Teilstrom in den Ringraum (11) eingeleitet wird, in unterschiedlichen Höhenstufen angeordnet sind.

14. Anlage nach den Ansprüchen 10 bis 13, dadurch gekennzeichnet, daß die Leitungen, über die der Teilstrom in den Ringraum (11) eingeleitet wird, schräg nach oben und tangential zu dem Strömungsleitrohr (4) gerichtet sind.

15. Anlage nach einem der Ansprüche 10 bis 14, dadurch gekennzeichnet, daß von der Zuführungsleitung (8) für das Abwasser hinter der Pumpe (16) eine weitere Teilstromleitung (17) abgezweigt ist, die oberhalb des Flüssigkeitsspiegels in dem Misch- und Entgasungsgefäß (2) endet und mit einem Düsensystem zum Versprühen eines Abwasser-Teilstroms auf die Flüssigkeitsoberfläche versehen ist.

16. Anlage nach einem der Ansprüche 10 bis 15, dadurch gekennzeichnet, daß die Einleitung des sauerstoffhaltigen Gases über die Zweistoffdüse durch mehrere mittig im Düsenquerschnitt angeordnete Rohre oder Austrittsöffnungen erfolgt, deren Durchmesser nicht größer als 50 mm ist.

## Claims

1. Process for the biological cleaning of effluent in a sealed reactor operating as a loop-type bubble column, wherein the effluent is fed together with an oxygen-containing gas, preferably air, via a dual-material nozzle to an inner circulation conduit, which it leaves at the lower end, then flowing upwards via an annular chamber surrounding the conduit, whereupon a quantity of the effluent not flowing via an overflow passes back into the upper end of the conduit, characterised in that a mixture of effluent, biomass and, optionally, recycled sludge is fed into the lower region of at least one circulation conduit, after prior degassing, together with the oxygen-containing gas, in that a partial stream of the effluent to be treated is fed to the effluent stream rising in the annular chamber, and in that some of the treated mixture is constantly passing via an overflow into a mixing and degassing tank, into which the pollutant-containing water to be treated is also passed and from which the mixture is taken, both the exhaust gas produced in the process and the mixture (discharge) to be treated being drawn from the mixing and degassing tank.

2. Process according to claim 1, characterised in that the mixture is passed into a plurality of circulation conduits connected in parallel and arranged symmetrically in the casing chamber of the reactor.

3. Process according to claim 1 and 2, characterised in that the partial stream of the mixture to be treated is injected into the annular chamber.

4. Process according to claims 1 to 3, characterised in that the partial stream is divided and injected into different levels of the annular chamber.

5. Process according to one of the preceding claims, characterised in that the partial stream is so introduced into the annular chamber that an obliquely upward-directed flow is imposed on the mixture.

6. Process according to one of claims 1 to 5, characterised in that approximately 10 - 20 % of the mixture to be treated is introduced into the annular chamber as a partial stream.

7. Process according to one of claims 1 to 6, characterised in that from the feed pipe for the mixture to be treated a further partial stream, preferably approximately 5 %, is taken, and is atomised in the fluid-free chamber of the mixing and degassing tank.

8. Process according to one of claims 1 to 7, characterised in that the quantity of air supplied to the dual-material nozzle is taken from the chamber not filled with fluid of the mixing and degassing tank.

9. Process according to one of claims 1 to 8, characterised in that one or more additional loop-type bubble columns operating in parallel and/ or in series is or are connected to one or more mixing and degassing tanks.

10. Apparatus for carrying out the process according to claims 1 to 9, consisting of a vertically standing loop-type bubble column with a circulation conduit and an outer casing surrounding same so as to form an annular chamber, and a dual-material nozzle mounted in the circulation conduit comprises a downward-facing outlet for supplying the effluent to be treated and an oxygen-containing gas and also comprises an overflow for discharging the treated effluent, which overflow is disposed in the casing above the upper end of the circulation conduit, which is open at the top and bottom, characterised in that the dual-material nozzle (6) is respectively mounted in the lower section, preferably shortly upstream of the lower end of the circulation conduit (4) or the circulation conduits, in that a branch pipe (9) branches off from the pipe (8) through which the effluent is fed to the dual-material nozzle, and through said branch pipe a partial stream of the effluent is fed to one or more single-material nozzles (10, 10a) disposed in the annular chamber (11), and in that the overflow (13) opens into a mixing and degassing tank (2), into whose lower section the effluent to be treated is introduced via an inlet pipe (15) and from whose bottom, which preferably converges conically, the effluent to be treated is fed, together with degassed biomass, to the nozzles (6, 10, 10a) via a pump (16) and the pipe (8).

11. Apparatus according to claim 10, characterised in that a plurality of circulation conduits equipped with dual-material nozzles are arranged in parallel in the casing chamber of the reactor.

12. Apparatus according to claim 11, characterised in that a plurality of, preferably three to five, further circulation conduits are arranged symmetrically around a central circulation conduit.

13. Apparatus according to claims 10 to 12, characterised in that the nozzles (10, 10a) through which the partial stream is introduced into the annular chamber (11) are arranged at different levels.

14. Apparatus according to claims 10 to 13, characterised in that the pipes through which the partial stream is introduced into the annular chamber (11) are oriented obliquely upwards and tangentially to the circulation conduit (4).

15. Apparatus according to one of claims 10 to 14, characterised in that, upstream of the feed pipe (8) for the effluent behind the pump (16), a further partial flow pipe (17) branches off, which ends above the fluid level in the mixing and degassing tank (2) and which is provided with a nozzle system for atomising an effluent partial stream on to the fluid surface.

16. Apparatus according to one of claims 10 to 15, characterised in that the oxygen-containing gas is introduced via the dual-material nozzle through a plurality of tubes or outlet apertures having a diameter of not greater than 50 mm and arranged centrally in the nozzle cross-section.

## Revendications

1. Procédé de purification biologique d'eau usée dans un réacteur fermé fonctionnant en boucle, dans lequel l'eau usée est dirigée en même temps qu'un gaz contenant de l'oxygène, de préférence de l'air, par l'intermédiaire d'une buse à double sortie vers un tube conducteur de courant interne, qui le quitte à son extrémité inférieure et s'écoule vers le haut en passant par une enceinte annulaire entourant le tube conducteur, une quantité d'eau usée qui ne s'écoule pas par le déversoir étant renvoyée à l'extrémité supérieure du tube conducteur, caractérisé en ce qu'un mélange d'eau usée, de biomasse et éventuellement de boue de recyclage est envoyé dans la partie inférieure d'au moins un tube conducteur de courant après dégazage préalable en même temps que le gaz contenant de l'oxygène, un courant partiel de l'eau usée à traiter est envoyé dans le courant d'eau usée qui monte dans l'enceinte annulaire, et une partie du mélange traité sort continuellement et exclusivement par un déversoir pour parvenir dans un réservoir mélangeur et de dégazage dans lequel l'eau contenant des substances nocives à traiter est introduite et duquel est prélevé le mélange, les gaz perdus qui apparaissent pendant le procédé ainsi que le mélange à traiter (mélange de sortie) étant prélevés du réservoir mélangeur et de dégazage.

2. Procédé selon la revendication 1, caractérisé en ce que le mélange est introduit par plusieurs tubes conducteurs de courant montés en parallèle, qui sont disposés symétriquement dans l'enceinte de l'enveloppe du réacteur.

3. Procédé selon les revendications 1 et 2, caractérisé en ce que le courant partiel du mélange à traiter est injecté dans l'enceinte annulaire.

4. Procédé selon l'une quelconque des revendications 1 à 3, caractérisé en ce que le courant partiel est subdivisé et injecté dans l'enceinte annulaire à des niveaux en hauteur différents.

5. Procédé selon l'une quelconque des revendications précédentes, caractérisé en ce que le courant partiel est introduit dans l'enceinte annulaire de manière que soit imposé au mélange un écoulement dirigé en oblique vers le haut.

6. Procédé selon l'une quelconque des revendications 1 à 5, caractérisé en ce qu'environ 10 à 20% du mélange à traiter sont introduits sous forme d'un courant partiel dans l'enceinte annulaire.

7. Procédé selon l'une quelconque des revendications 1 à 6, caractérisé en ce qu'un autre courant partiel qui est de préférence d'environ 5% est prélevé de la conduite d'amenée destinée au mélange à traiter et est pulvérisé dans l'enceinte ne contenant pas de liquide du réservoir mélangeur et de dégazage.

8. Procédé selon l'une quelconque des revendications 1 à 7, caractérisé en ce que la quantité d'air qui est envoyée dans la buse à double sortie est prélevée de l'espace du réservoir mélangeur et de dégazage qui n'est pas rempli par le liquide.

9. Procédé selon l'une quelconque des revendications 1 à 8, caractérisé en ce qu'un ou plusieurs réacteurs à boucle additionnels qui fonctionnent en parallèle et/ou en série sont raccordés à un ou plusieurs réservoirs mélangeurs et de dégazage.

10. Installation pour la mise en oeuvre du procédé selon l'une quelconque des revendications 1 à 9, constituée par un réacteur à boucle monté verticalement, comprenant un tube conducteur de courant et une enveloppe extérieure entourant ce dernier en formant une enceinte annulaire, une buse à double sortie disposée dans le tube conducteur de courant et dirigée vers le bas pour l'amenée de l'eau usée à traiter et d'un gaz contenant de l'oxygène, et également un déversoir pour la sortie de l'eau usée traitée qui est disposé dans l'enveloppe au-dessus de l'extrémité supérieure du tube conducteur de courant ouvert en haut et en bas, caractérisée en ce que la buse à double sortie (6) est placée dans la section inférieure et de préférence peu avant l'extrémité inférieure du tube conducteur de courant (4) ou des tubes conducteurs de courant, en ce qu'une conduite de dérivation (9) part de la conduite (8) par laquelle l'eau usée est amenée à la buse à double sortie, conduite de dérivation par laquelle est dirigé un courant partiel d'eau usée vers une ou plusieurs buses à sortie unique (10, 10a) qui sont placées dans l'enceinte annulaire (11), et en ce que le déversoir (13) débouche dans un réservoir mélangeur et de dégazage (2) dans la section inférieure duquel est envoyée l'eau usée à traiter par une conduite d'entrée (15), et dont l'eau usée à traiter est envoyée en même temps que la biomasse dégazée par une pompe (16) et la conduite (8) vers les buses (6, 10, 10a) en partant de son fond qui est de préférence de forme conique.

11. Installation selon la revendication 10, caractérisée en ce que dans l'espace de l'enveloppe du réacteur sont montés plusieurs tubes conducteurs de courant disposés en parallèle et équipés de buses à double sortie.

12. Installation selon la revendication 11, caractérisée en ce que plusieurs autres tubes conducteurs de courant, de préférence au nombre de trois à cinq, sont montés symétriquement autour d'un tube conducteur de courant disposé centralement.

13. Installation selon l'une quelconque des revendications 10 à 12, caractérisée en ce que les buses (10, 10a) par lesquelles est introduit le courant partiel dans l'enceinte annulaire (11) sont disposées à des niveaux en hauteur différents.

14. Installation selon l'une quelconque des revendications 10 à 13, caractérisée en ce que les conduites par lesquelles est introduit le courant partiel dans l'enceinte annulaire (11) sont dirigées en oblique vers le haut et tangentiellement par rapport au tube conducteur de courant (4).

15. Installation selon l'une quelconque des revendications 10 à 14, caractérisée en ce qu'une autre conduite à courant partiel (17) part en dérivation de la conduite d'amenée (8) destinée à l'eau usée à l'arrière de la pompe (16), conduite à courant partiel qui se termine au-dessus du niveau du liquide dans le réservoir mélangeur et de dégazage (2) et qui est munie d'un système de buses pour pulvériser un courant partiel d'eau usée sur la surface du liquide.

16. Installation selon l'une quelconque des revendications 10 à 15, caractérisée en ce que l'introduction du gaz contenant de l'oxygène par la buse à double sortie a lieu par plusieurs tubes ou ouvertures de sortie disposés centralement dans la section de la buse, dont le diamètre n'est pas supérieur à 50 mm.
